# EUROPEAN PATENT APPLICATION

(11) **EP 2 233 888 A2**
(43) Date of publication of application: **29.09.2010**
(21) Application number: 10154182.9
(22) Date of filing: 19.02.2010
(51) Int. Cl.: G01C 23/00

(54) **Systems and methods for the display of informational waypoints**

(30) Priority: 26.03.2009 US 412145
(71) Applicant: Honeywell International Inc., Morristown, NJ 07962 (US)
(72) Inventor: Cundiff, Chad, Morristown, NJ 07962-2245 (US); Suddreth, John G., Morristown, NJ 07962-2245 (US); Nichols, Troy, Morristown, NJ 07962-2245 (US)
(74) Representative: Buckley, Guy Julian

(57) **Abstract**

Provided are methods and systems for automatically inserting intermediate waypoint information between travel critical waypoint information in an electronic waypoint list. The electronic waypoint list may contain travel critical waypoint information representing a planned track for a ship, an aircraft, a train or a terrestrial motor vehicle such as a truck. Two collinear, travel critical waypoints are received and inserted into the electronic list of waypoints. The location of an intermediate waypoint is then determined from a database containing records of a plurality of waypoints. If the location of the intermediate waypoint exists on a line between the at least two collinear, travel critical waypoints, then the intermediate waypoint is inserted in the electronic list of waypoints. If not, then the intermediate waypoint is discarded and another waypoint is examined to see if it exists on the line. The process is repeated until al of the intermediate waypoints have been reviewed and added or reviewed and rejected.

## Description

### TECHNICAL FIELD

The subject matter described herein relates to the insertion of intermediate waypoints, landmarks and/or navigation aids into an electronic waypoint list that may be used to facilitate the navigation of a vehicle. Vehicles in which these systems and methods may be useful include aircraft, watercraft and terrestrial motor vehicles.

### BACKGROUND

Vehicle operators often travel routes that are marked by important turn points or progress points that are followed in order to arrive at a certain destination at a certain time. In some instances those turn points and progress points (together "waypoints") may be unfamiliar, are difficult to discern or are just not visible. The negative consequences for missing an important waypoint could result in, lost time and/or lost profits, and/or various other undesirable outcomes. Such concerns exist across all transportation segments including aviation, maritime shipping and automotive travel. As such, there is a need for a system and method for providing intermediate waypoint information between and near travel critical waypoints.

### SUMMARY

It should be appreciated that this Summary is provided to introduce a selection of exemplary non-limiting concepts. In one exemplary embodiment a method for automatically inserting a geographic waypoint into an electronic list of geographic waypoints comprises receiving at least two collinear, travel critical waypoints and inserting these waypoints into the electronic list of waypoints. The location of the waypoint is then determined from a database containing records of a plurality of waypoints. If the location of the waypoint exists on a line between the at least two collinear travel critical waypoints, then the waypoint is inserted in the electronic list of waypoints. If not, then the waypoint is discarded and another waypoint is examined to see if it exists on the line.

In another exemplary embodiment a computer readable medium is disclosed which contains instructions thereon that when executed receives at least two collinear, travel critical waypoints and inserting these waypoints into the electronic list of waypoints. The location of the waypoint is then determined from a database containing records of a plurality of waypoints. If the location of the waypoint exists on a line between the at least two collinear travel critical waypoints, then the waypoint is inserted in the electronic list of waypoints. If not, then the waypoint is discarded and another waypoint is examined to see if it exists on the line.

In another exemplary embodiment a method for automatically inserting a geographic waypoint along a planned track of a vehicle into an electronic list of geographic waypoints comprises receiving at least two collinear, travel critical waypoints and inserting the at least two collinear travel critical waypoints into the electronic list of waypoints. The location of the waypoint from a database containing records of a plurality of waypoints is then determined and if the location of the waypoint is not within a predetermined distance perpendicular to the planned track, then the waypoint is discarded. If the location of the waypoint is within the predetermined distance perpendicular to the planned track, then the waypoint is inserted in the electronic list of waypoints.

### BRIEF DESCRIPTION OF THE DRAWINGS

Figure 1 is a rendition of an aircraft cock pit showing an exemplary location for an electronic waypoint list.

Figure 2a illustrates an exemplary electronic waypoint list as it may apply to an exemplary aircraft taxi route depicted in Figure 2b.

Figure 3a illustrates an exemplary electronic waypoint list as it may apply to an exemplary aircraft route depicted in Figure 3b.

Figure 4 illustrates a simplified, exemplary system for creating an electronic waypoint list according to the various embodiments disclosed herein.

Figure 5 is a flow diagram illustrating an exemplary method for creating an electronic waypoint list that may show all waypoints along a projected track.

Figure 6 is a flow diagram illustrating an exemplary method for creating an electronic waypoint list that may show all only soft waypoints just prior to a hard waypoint.

Figure 7 is a flow diagram illustrating an exemplary method for creating an electronic waypoint list that may show all waypoints along a track that are within a certain distance from the track.

Figure 8 is a flow diagram illustrating an exemplary method for creating an electronic waypoint list that may show the nearest soft waypoints to hard waypoints along a track that are within a certain distance from the track.

### DETAILED DESCRIPTION

The following disclosure is directed to systems and methods to insert intermediate waypoints, landmarks and/or navigation aids into an electronic waypoint list that maybe used by an operator of a vehicle in the navigation of a vehicle.

The subject matter now will be described more fully below with reference to the attached drawings which are illustrative of various embodiments disclosed herein. Like numbers refer to like objects throughout the following disclosure. The attached drawings have been simplified to clarify the understanding of the systems, devices and methods disclosed. The subject matter may be embodied in a variety of forms. The exemplary configurations and descriptions, infra, are provided to more fully convey the subject matter disclosed herein.

The subject matter herein will be disclosed below in the context of an aircraft. However, it will be understood by those of ordinary skill in the art that the subject matter is similarly applicable to many vehicle types. Non-limiting examples of other vehicle types in which the subject matter herein below may be applied includes aircraft, watercraft and terrestrial motor vehicles and may be incorporated into existing commercial products. Without limitation, terrestrial motor vehicles may also include military combat and support vehicles of any description.

Further, one of ordinary skill in the art would recognize that any moving maps described herein in conjunction with the use of an electronic waypoint list may be created by any suitable software known in the art and may render a bird's eye lateral view or may render an operator's perspective view of the proximate geography being traversed. Additionally enhanced signage may also be used to clarify and highlight any physical signage that may actually exist or not exist as the case may be. As a non-limiting example, enhanced signage may be rendered by overlaying a textual and/or a symbolic icon over the top of or proximate to a particular landmark or waypoint on a moving map.

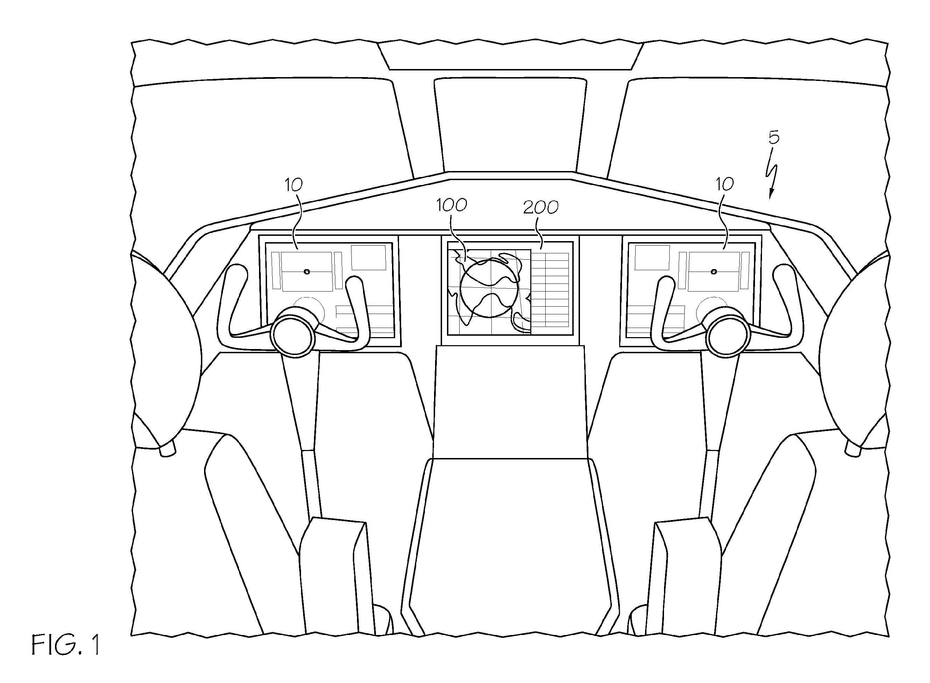

FIG. 1 is an exemplary view of an aircraft cockpit information and control display 5 that may incorporate the electronic waypoint list 200, as disclosed herein. Generally, the information and control display 5 may comprise a primary flight display 10 for each of the pilot and co-pilot which may provide the flight crew with a means to control the aircraft. The cockpit display 5 may also include a multi-function display 100 which may also be referred to herein as the "moving map" and may be used in conjunction with the electronic waypoint list 200 to display waypoints and enhanced signage as may be known in the art. The multi function display 100 may also include the electronic waypoint list 200.

The electronic waypoint list 200 may be used by the flight crew to improve its situational awareness by keeping track of particular waypoints, landmarks and/or navigational aids along a particular path of travel of their vehicle. An exemplary path of travel may comprise an aviation flight plan or a taxiway path from one point in an airport to another.

Typically, an electronic waypoint list 200 may display textual waypoints in their order of proximity to the vehicle along a planned track. As the vehicle passes each successive waypoint, that waypoint may drop off the electronic waypoint list and may be replaced by the next successive waypoint as the waypoint list 200 moves the next successive waypoint up the list. Herein below, the terms "waypoints", "landmarks" and "navigational aids" may be used interchangeably as specific terminology may vary between the aviation, maritime and motor vehicle communities. As non-limiting examples, a navigation aid may be a sea buoy, a water tower, or a mountain peak. Each of these may be also referred to as landmarks or waypoints. Non-limiting examples of such situations where waypoints may be useful would include an aircraft proceeding on its flight plan, a waterborne vessel maneuvering through a harbor channel, or an automobile proceeding on a road trip.

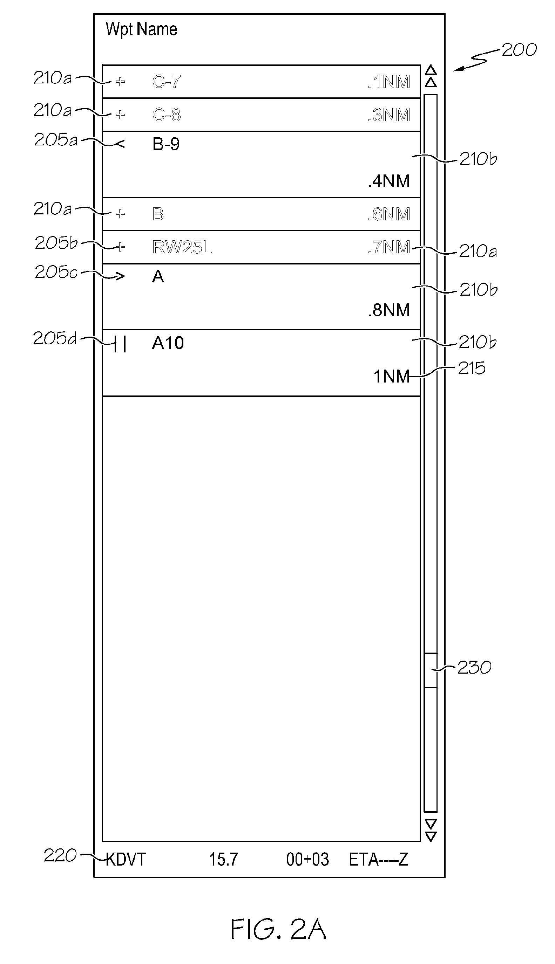

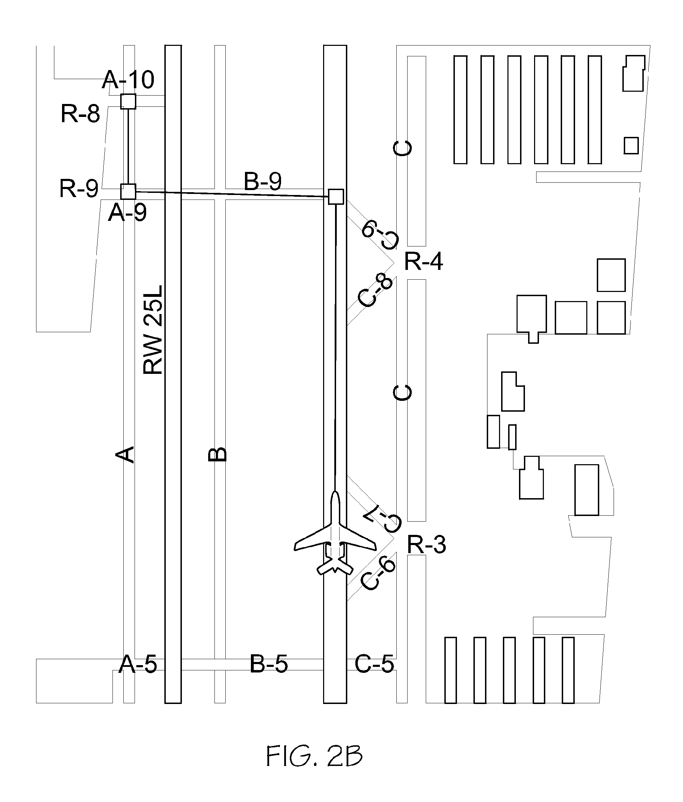

FIG. 2A illustrates an exemplary embodiment of an electronic waypoint list 200 for an aircraft taxi route along the route indicated in FIG 2B. The waypoint list 200 may comprise a mixed list of informational (i.e. "soft") waypoints 210a and mandatory or travel critical (i.e. "hard") waypoints 210b (together "waypoints 210"). Hard waypoints 210b may include any number of geographical locations that an outside authority may require a vehicle to follow or that may represent important turn points that the vehicle may need to follow in order to successfully arrive at a desired location.

In FIGs. 2A and 2B, the hard waypoints 210b include taxiway B-9 where a left turn is required (see, 205a), taxiway A where a right turn is required (see, 205c) and gate A-10 where the aircraft is chocked for disembarking passengers (see, 205d). On the other hand, soft waypoints 210a may be informational in nature and may identify landmarks that may be passed by as a journey progresses. Soft waypoints 210a may help orient a vehicle operator, such as a pilot, to his current position or may provide a heads up warning that he is approaching a hard waypoint 210b that may require him to maneuver his vehicle.

The soft waypoints include the intersection with taxiway C-7 that is passed (see, 205b) and the intersection with taxiway C-8 that is passed prior to the left hand turn onto taxiway B-9. Other soft waypoints include the intersection with taxiway B that is passed, and the intersection with Runway 25 Left (RW25L) that is passed just prior to the right turn onto taxiway A.

It would be appreciated that, hard waypoints 210a and soft waypoints 210b may be rendered differently on the electronic waypoint list 200. Non-limiting examples of differentiation may include different colors, fonts or other presentation formats. Hard and soft waypoints 210a and 210b may also comprise other information, such as maneuvering symbology 205a-d, and a range 215 from the vehicle. The range 215 may be an absolute distance to a waypoint 210 or it may be a magnitude of a component of the range vector to the way point 210 that lies along the track of the vehicle.

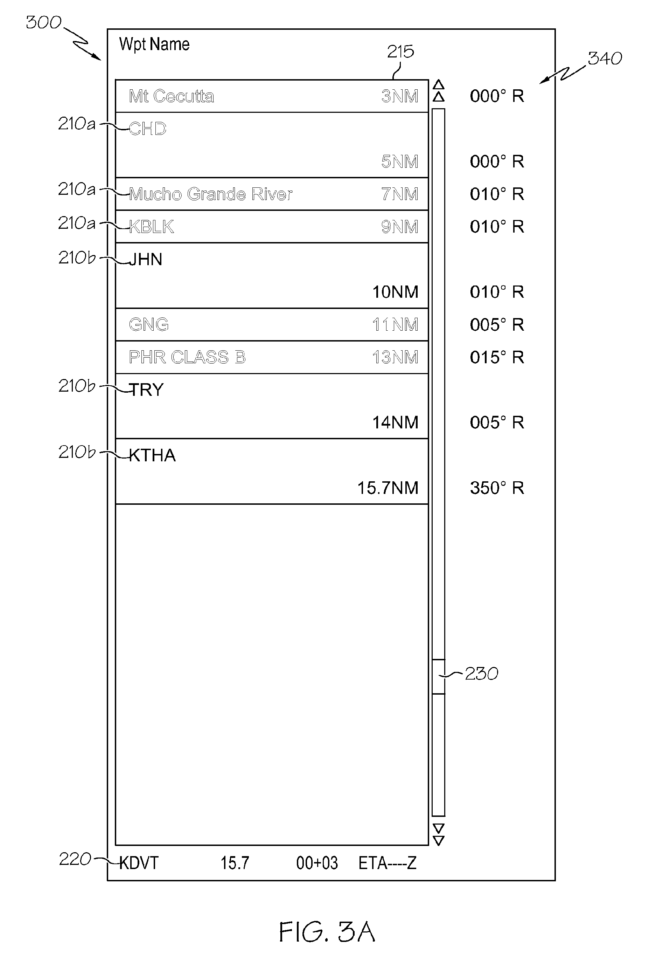

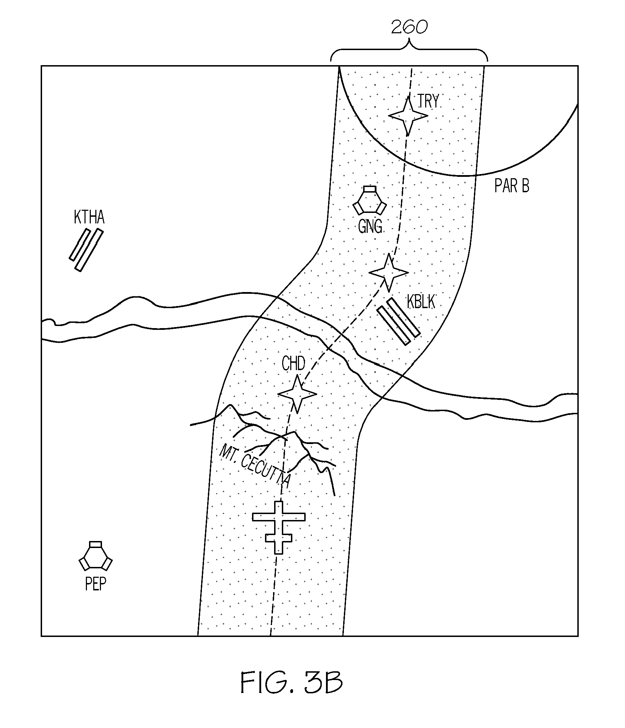

FIG. 3A illustrates another non-limiting exemplary embodiment of the electronic waypoint list 200 that may be tailored for an aircraft flying along the route indicated in FIG 3B. As with the above-described embodiment, the waypoint list 200 may comprise a mixed list of informational soft waypoints 210a and hard waypoints 210b. in the depicted embodiment the soft waypoints 210a include geographical locations or prominent landmarks that fall within a predefined range restriction 260 (Figure 3B) on either side of the vehicle's line of travel. A non-limiting example of a predefined range 260 may be a pilot's range of visibility or line of sight. Visibility range may be manually adjusted or may be adjusted automatically based on environmental or atmospheric information derived from inputs from the various avionics sensors and/or environmental sensors common 470 to an aircraft or other type of vehicle.

Hard waypoints 210b may include any number of geographical positions that may be required by an outside authority to be followed or may be critical turn points or progress points that need to be followed in order to successfully arrive at a desired location. Typically, hard waypoints 210b lie on the vehicle's planned track or may lie in close proximity thereto. One of ordinary skill in the art will recognize that changing the vehicle's planned track may cause soft waypoints 210a to become hard waypoints 210b and vice versa, with corresponding automatic changes in the electronic waypoint list 200 presentation.

In FIGs. 3A and 3B, the listed hard waypoints 210b include position CHD where a right turn is required, position JHN where a left turn is required, and position TRY, which has to be crossed at a specific time. Hard waypoints may be visible landmarks or they may be geographical positions defined by a particular latitude and longitude.

Soft waypoints 210a may be informational in nature and may identify visible landmarks that may be passed by as a journey progresses. Soft waypoints 210a may help orient a vehicle operator, such as a pilot, to his current position or may provide a warning that he is approaching a hard waypoint 210b that may require him to maneuver his vehicle. In FIG. 3A and 3B, soft waypoints 210a include geographic landmarks such as Mt. Cecutta, Mucho Grande River, Navigational Aid GNG and airport KBLK. Other soft waypoints may include restricted airspace or air control symbology such as restricted airspace delineation PXR B. The electronic waypoint list may also contain destination, estimate time of arrival (ETA) and other desired data.

In the embodiment depicted in Figs. 3A and 3B, it is also seen that the electronic waypoint list 200 may include direction information 340 such as a relative or a true bearing to a particular waypoint or a landmark 210. As may be appreciated, the bearing information may change in real time as the vehicle progresses along the route delineated by the hard waypoints 210b. One of ordinary skill in the art will recognize that bearing and range information may change and be displayed in real time, periodically, in unison or on an ad hoc basis and still fall within the scope of the disclosure herein.

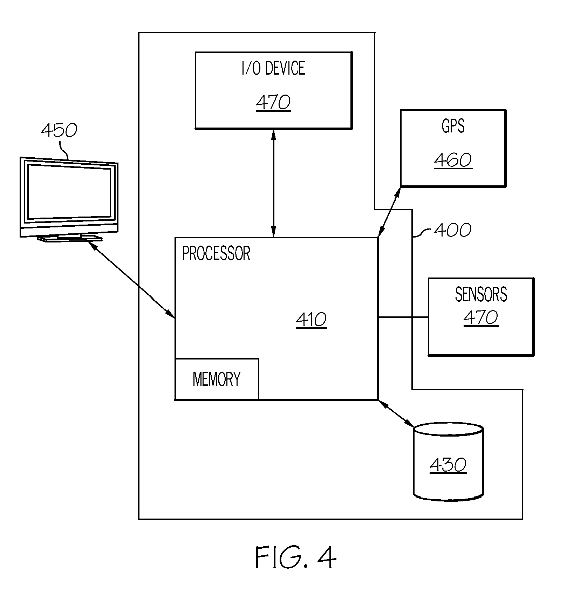

The electronic waypoint list 200 may be compiled and processed for rendering by any suitable computing device. FIG. 4 illustrates one exemplary, simplified system. As a non-limiting example, the system 400 includes one or more processors 410, a memory module 420, a database 430 and one or more input/output (I/O) interfaces 440.

Processor 410 may be any suitable processor or combination of sub-processors that may be known in the art. For example, processor 410 may include a central processing unit, an embedded processor, a specialized processor (e.g. digital signal processor), or any other electronic element responsible for interpretation and execution of instructions, performance of calculations and/or execution of voice recognition protocols. Processor 410 may communicate with, control and/or work in concert with other functional components, including but not limited to a video display device 450, a geographical positioning system (GPS) 460 and/or one or more avionic and/or atmospheric sensor/processors 470. It is further noted that the processor 410 is just one non-limiting example of a computer readable medium.

GPS 460 provides current vehicle position information as an input to, among other things, compute the bearing and range to various waypoints 210 as well as causing the progression of waypoints 210 within the electronic waypoint list 200. Avionic/atmospheric sensors 470 provide data concerning airspeed, fuel burn, fuel supply, engine operating parameters, direction of travel, elevation, line of sight, visibility range, etc., as for use in calculating estimated time of arrival and other functions of the FMS 5. Atmospheric sensors provide various weather data that is useful in determining a pilot's visibility range.

Processor 410 may include a memory module 420. Memory module 420 may comprise any type or combination of Read Only Memory, Random Access Memory, flash memory, programmable logic devices (e.g. a programmable gate array) and/or any other suitable memory device that may currently exist or be developed in the future. The memory module 420 is also a non-limiting example of a computer readable medium.

The database 430 is in operable communication with the processor 410, and contains a plurality of waypoint records (not shown). Each record preferably contains information concerning a particular waypoint 210. Non-limiting examples of such information include a geographical position of the waypoint (e.g. latitude/longitude, bearing/range, etc), a textual name of the waypoint, a waypoint code, a means for associating with other adjacent way point records, and/or a flag indicating whether the waypoint is to be considered a hard waypoint 210b or a soft waypoint 210a. As a non-limiting example, an association between waypoints may be achieved by listing or indexing adjacent or proximate waypoints in the record of the particular waypoint 210.

It will be appreciated that database 430 may be implemented as a relational, flat, post-relational or any other type of suitable database known in the art which may be stored on any suitable volatile or non-volatile memory device. Non-limiting examples of such memory devices may include hard magnetic disks, optical disks, flash memory disks, and programmable logic devices, among other types of memory device devices commonly used in the art, now or that may be developed in the future. These memory devices are further non-limiting examples of computer readable media.

The I/O device 440 is in operable communication with processor 410, and is preferably configured to receive input from a user. The I/O device 440 may be implemented using one or more well known devices, such as a keyboard or a mouse. The I/O device 440 may also be implemented using devices capable of receiving waypoints 210 wirelessly, or using actuated/responsive such that waypoint 210 may be inputted verbally.

The visual display device 450 may be any suitable visual display device known in the art. Non-limiting examples of the visual display device 450 may include liquid crystal display devices, plasma screen devices, computer monitors, televisions and the like. The visual display device 450 may be an interactive graphical user interface (GUI). The visual display device may have a scroll bar 230 and may display the destination 220.

One of ordinary skill in the art will recognize after reading the disclosure herein that other components, different components and different topologies within the computing system 400 may be utilized to accomplish the compiling and rendering of the electronic waypoint list 200. Communication between components may use multiple parallel paths, a single serial path, or any other communication scheme and may be accomplished via cable runs or data busses as may be found to be useful.

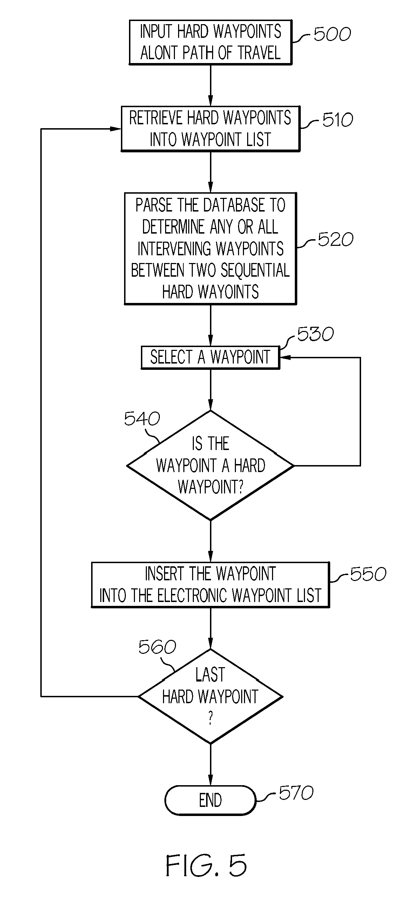

Processor 410 may also contain computer readable instructions that, when executed, may perform a variety of acts. FIG. 5 is a non-limiting, exemplary embodiment of the acts that may executed by processor 410. One of ordinary skill in the art will recognize that the processes depicted in FIG. 5 and the following figures may include more or fewer steps, as steps my be divided into sub-steps or sub-steps combined into fewer steps. One of ordinary skill in the art will also recognize that a logic function may be accomplished by a variety of methods. The logic functions described herein are not intended to be limited to the specific rule described but may be a converse, inverse or other rule or set of rules that accomplishes the same function regardless of structure or the number of sub-steps. Processor 410 may also contain computer readable instructions that, when executed, may perform additional acts including casualty recovery or redundancy actions.

At process 500, the hard waypoints 210b are input to the computer system 400 via, for example, I/O device 440 for use by processor 410 to construct the electronic waypoint list 200. The hard waypoints 210b may originate from a travel authority, such as an air traffic control, or may be determined by the vehicle operator such as a pilot, driver or a navigator. The hard waypoints 210b maybe received via a wired connection or may be received via a wireless I/O device and may interface using any suitable wireless protocol. Non-limiting example of wireless protocols may include Zigbee, Wi-Fi and Bluetooth^{™}. The hard waypoints 210b may be received directly into the memory 402. In an alternative embodiment, the hard waypoints 210b may be received directly by the processor 410 and later stored into memory 420.

At process 510, the inputted hard waypoints 210b may be retrieved from memory 420 and inserted into the electronic waypoint list 200 by the processor 410. Hard waypoints 210b may be rendered using a prominent or a different font or color to identify particular waypoints 210 as being hard waypoints 210b as opposed to soft waypoints 210a.

At process 520, the database 430 is parsed by the processor 410 to retrieve all waypoints 210 in the database between two sequential waypoints. The sequential waypoints may be a starting location and an ending location along the route identified by the hard waypoints 210b. Alternatively, the processor may retrieve all of the waypoints 210 in the database between any two consecutive hard waypoints 210b.

At process 530, a first (or a next) waypoint 210 is selected from the plurality waypoints 210 parsed from the database 430. The processor 410 determines if the selected waypoint is a hard waypoint 210b or a soft waypoint 210b at decision point 540. This determination may be accomplished by any number of means as may be known in the art. As a non-limiting example, the determination may be made by noting whether the flag in the database record of the selected waypoint 210 is set to indicate a hard waypoint 210b or not. If the selected way point 210 is a hard waypoint 210b that is already in the electronic waypoint list 200, then the processor may select another or may select the next waypoint parsed from the database 430. If the selected waypoint is a soft waypoint 210a, then at process 550 the selected waypoint 210a is inserted into the electronic waypoint list 200 in its order of distance from one of the hard waypoints 210b between which the soft way point 210a physically exists. When the last hard waypoint 210b is processed at decision point 560, the process ends at process 580. The last hard waypoint 210b may be a destination. Otherwise, the next hard waypoint 210b is retrieved and processes 510-560 are repeated, until all of the soft waypoints 210a along the vehicle's planned track have been inserted.

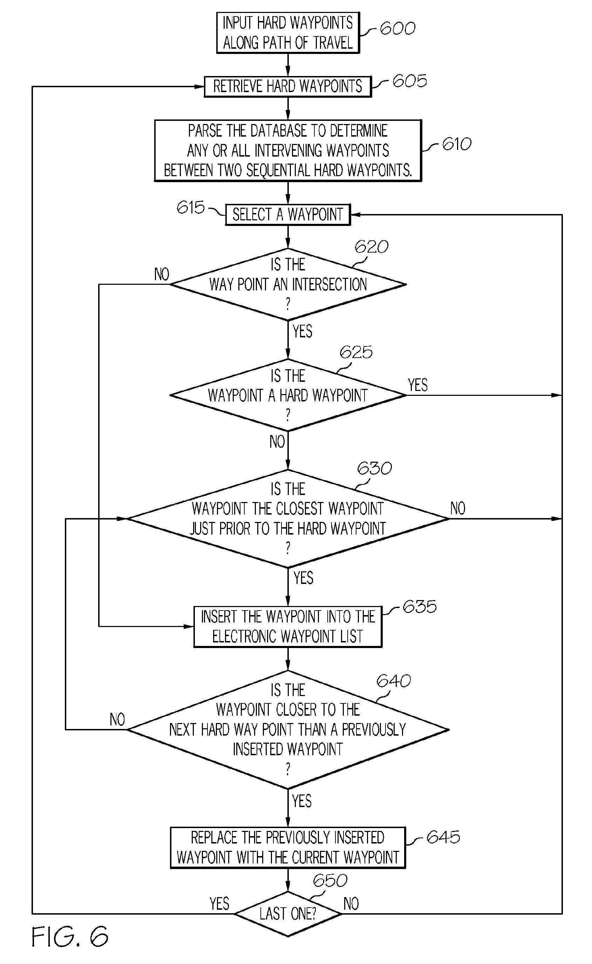

FIG. 6 illustrates another exemplary embodiment of the subject matter described herein as it may relate to an aircraft taxiway or a route for an automobile or a ship. At process 600, hard waypoints 210b are input into the computer system 400 via, for example, the I/O device 440 for use by processor 410 to construct the electronic waypoint list 200. The hard waypoints may be received directly into the memory 420. At process 605, at least two hard waypoints 201b may be retrieved from memory 420 by processor 410. In another embodiment, the hard waypoints 210b may be received directly into the processor 410 and later stored in the memory 420.

At process 610, the processor 410 parses the database 430 and retrieves all of the soft waypoints 210a between the retrieved hard waypoints 210b. At process 615 a soft waypoint 210a is selected from the retrieved waypoints 210a. At decision point 620, it is determined if the selected waypoint 210a is an intersection between taxiways, roads or even maritime shipping channels. If the waypoint 210 is not an intersection then the method moves to process 635. If the selected waypoint is an intersection, it is determined at decision point 625 if the selected waypoint 210 is a hard waypoint 210b. If the examined waypoint 210 is a hard waypoint 210b then the method returns to process 615 where another waypoint 210 is selected. If the waypoint is a soft waypoint 210a, then it is determined if the examined waypoint 210a is the closest waypoint 210a to the next successive hard waypoint 210b in the electronic waypoint list 200 at decision point 630. If the soft waypoint 210a is not the closest waypoint to the next successive hard waypoint 210b, then the method returns to process 615 where another waypoint 210 is selected. If the waypoint 210a is the closest waypoint to the next successive hard waypoint 210b, then the waypoint 210a is inserted into the electronic waypoint list 200 at process 635. As mentioned above, if the selected waypoint is not an intersection then at process 635 the waypoint 210a is inserted into the list.

If the waypoint 210 is determined to be geographically closer to the next successive hard waypoint 210b at decision point 640 then the previously inserted waypoint 210a is replaced with the current waypoint 210a at process 645. If it is not then the method moves to determination point 630 and proceeds for that point. If the current waypoint is the last waypoint 210 to be examined at decision point 650 then the method returns to process 615 where the next waypoint 210 is selected. If the current waypoint is not the last waypoint 210 to be examined then the method returns to process 605 where additional hard waypoints 210b may be selected.

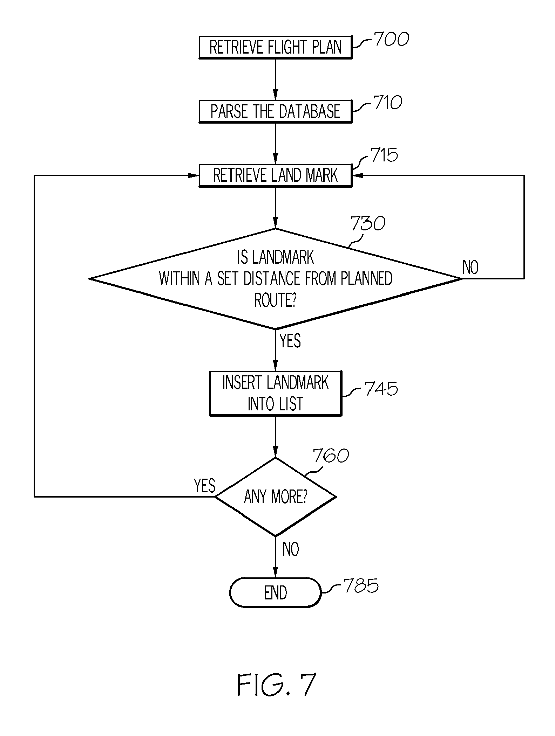

FIG. 7 illustrates another exemplary embodiment of the subject matter described herein as it may relate to a vehicle en route. At process 700, processor 410 retrieves a flight plan comprising a projected track of the vehicle with hard waypoints 210b that may be contained in the database 430. At process 710, processor 410 parses the records contained within the database 430 to obtain the landmarks 210a that may exist along the projected track. At process 715, a landmark 210a is retrieved for examination. At decision point 730, it is determined if a landmark 210a is located within a predetermined distance from, and that is perpendicular to, the projected track. If the landmark is not with in the predetermined distance then the method returns to process 715 where another landmark is retrieved. If the selected landmark 210a is within the predetermined distance then the processor 410 may insert the landmark 210a into the waypoint list 200 in its proper sequence at process 745. As a non-limiting example, the insertion into the electronic waypoint list 200 may be accomplished using a sub-routine or a method such as the method of FIG. 5. At process 760, it may be determined whether there may be any additional landmarks 210a. If there are no more landmarks, then the method may ends at process 785. If there are additional landmarks within the predetermined distance then the method may return to process 715 where another landmark may be retrieved.

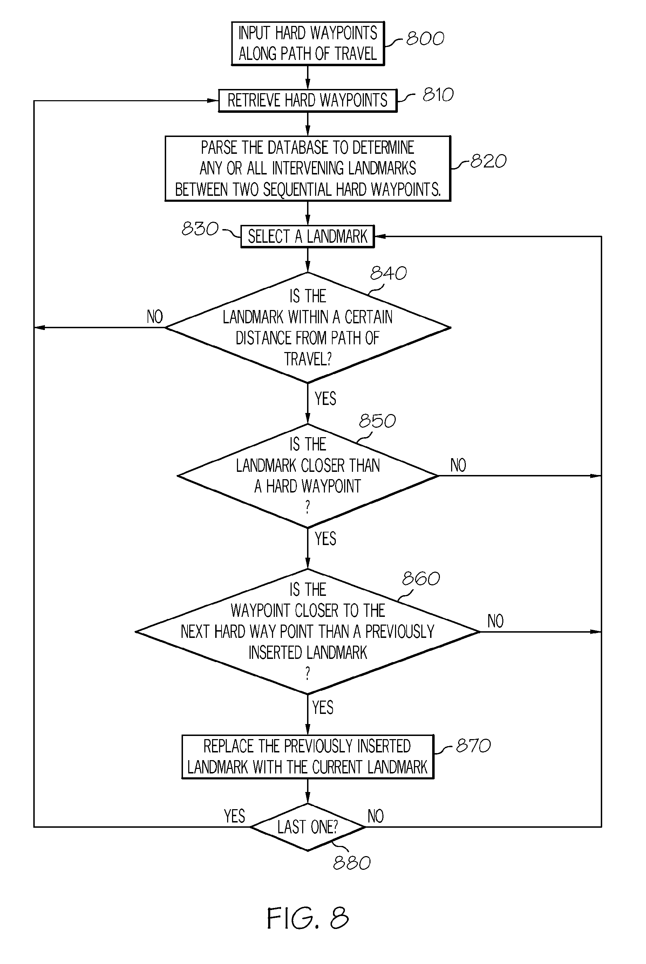

FIG. 8 illustrates another exemplary embodiment of the subject matter described herein as it may relate to a proposed tack of a vehicle. At process 800, processor 410 may receive a projected track including all hard waypoints 210b contained therein. At process 810 the hard waypoints 210b may be retrieved from the flight plan. At process 820, processor 410 may parse the database 430 containing the waypoint records to obtain landmarks 210a existing along the projected track of the vehicle. where a hard waypoint 210b may be selected for examination. At process 830, a landmark 210a is selected for examination.

At decision point 840, it may be determined whether the landmark 210a may be located within a predetermined distance from, and perpendicular to, the projected track. If the landmark 210a is not with in the predetermined distance, then the method may return to process 830 where another landmark 210a may be retrieved. If the selected landmark 210a is within the predetermined distance, then a further determination may be made at decision point 850 whether the landmark 210a is closer than any remaining hard waypoint 210b in the electronic waypoint list 200. If landmark 210a is closer than another hard waypoint 210b then the method may return to process 830 to select another landmark 210a. If the landmark 210a is closer than any remaining hard way point 210b, then a further determination is made at decision point 860. If the landmark 210a is not closer than any remaining hard way point 210b, then the process may return to process 830 where another landmark 210a may be retrieved.

At decision point 860, it may be determined whether or not the landmark 210a is closer to the next hard waypoint 210a that a previously inserted landmark 210b. If the current landmark 210a is closer to a hard waypoint 210b than another landmark 210a, then the current landmark 210a may replace the previous landmark 210a in the electronic waypoint list 200 at process 870. If the current landmark 210a is not closer to a hard waypoint 102b than another landmark 210a then the method may return to process 830 where another landmark is selected. If the land mark is the last one then the process may return to process 810 or it may end.

The subject matter described above is provided by way of illustration only and should not be construed as being limiting. Various modifications and changes may be made to the subject matter described herein without following the example embodiments and applications illustrated and described, and without departing from the true spirit and scope of the present invention, which is set forth in the following claims.

## Claims

1. A method for automatically inserting an intermediate waypoint into an electronic list of waypoints, comprising:
receiving at least two collinear, travel critical waypoints (210b) and inserting (635) the at least two collinear, travel critical waypoints (210b) into the electronic list of waypoints (200);
determining the location of the intermediate waypoint (210a) from a database 430 containing records of a plurality of waypoints;
if the location of the intermediate waypoint (210a) exists on a line between the at least two collinear, travel critical waypoints (210b), then inserting the intermediate waypoint (210a) into the electronic list of waypoints (200); and
if the location of the intermediate waypoint (210a) does not exist on a line between the at least two collinear, travel critical waypoints (210b), then determining the location of another intermediate waypoint (210a).

2. The method of claim 1 further comprising parsing the database (430) for records of a plurality of waypoints (210) between and including a first collinear, travel critical waypoint (210b) and a second collinear travel critical waypoint (210b).

3. The method of claim 2 further comprising determining all of the waypoints (210) in the database (430) existing on a line between the first collinear, travel critical waypoint (210b) and a second collinear travel, critical waypoint (210b).

4. The method of claim 1 wherein the waypoint (210) is an intersection.

5. The method of claim 1 wherein inserting the waypoint (210) into the electronic list of geographic waypoints (200) includes inserting each of the name, the current distance to the waypoint (210) and a prompt (205) for maneuvering at the waypoint.

6. The method of claim 1 further comprising, if the location of the intermediate waypoint (210a) is not closer to a current location of the vehicle along the planned track (260) than a collinear, travel critical waypoint (210b), then discard the intermediate waypoint (210a) and determine the location of another intermediate waypoint (210a) from the database (430).

7. The method of claim 6 further comprising, if the location of the intermediate waypoint (210a) is not closer to current location of the vehicle along the planned track (260) than a collinear, travel critical waypoint (210b), then discard the intermediate waypoint (210a) and determine the location of another intermediate waypoint (210a) from the database (430).

8. The method of claim 7 further comprising, if the location of the intermediate waypoint (210a) is closer to one of the two collinear, travel critical waypoints (210b) measured along the planned track (260) than a previously inserted intermediate waypoint (210a), then replace the previously inserted intermediate waypoint (210a) with the intermediate waypoint (210a).

9. The method of claim 8 further comprising, if the location of the intermediate waypoint (210a) is not closer to one of the two collinear, travel critical waypoints (210b) measured along the planned track (260) than a previously inserted intermediate waypoint (210a), then discard the intermediate waypoint (210a) and select another intermediate waypoint (210a) from the database (430).

10. A computer readable storage medium containing instructions thereon that when executed by a computing device accomplishes the acts of:
receiving at least two collinear, travel critical waypoints (210b) and inserting (635) the at least two collinear travel critical waypoints (210b) into the electronic list of waypoints (200);
determining the location of an intermediate waypoint (210a) from a database (430) containing records of a plurality of waypoints (210);
if the location of the intermediate waypoint (210a) exists on a line between the at least two collinear, travel critical waypoints (210b), then inserting the intermediate waypoint (210b) in the electronic list of waypoints (200); and
if the location of the intermediate waypoint (210a) does not exist on a line between the at least two collinear travel critical waypoints (210b), then determining the location of another intermediate waypoint (210a).
